# FASCICULE DE BREVET EUROPEEN

(11) **EP 0 807 019 B1**
(45) Date de publication et mention de la délivrance du brevet: **29.03.2000**
(21) Numéro de dépôt: 96902307.6
(22) Date de dépôt: 30.01.1996
(51) Int. Cl.: B32B 1/02, B32B 1/08, C08K 3/00, C08L 27/06

(54) **PROCEDE D'IGNIFUGATION D'UN COMPOSANT EN MATIERE PLASTIQUE APPARTENANT A UNE INSTALLATION DE DISTRIBUTION D'UN LIQUIDE INFLAMMABLE**
VERFAHREN ZUM FLAMMFESTMACHEN EINES KUNSTSTOFFTEILS BEI EINER ZUFUHRANLAGE FÜR BRENNBARE FLÜSSIGKEITEN
METHOD FOR FIREPROOFING A PLASTIC COMPONENT IN AN INFLAMMABLE LIQUID SUPPLY APPARATUS

(30) Priorité: 02.02.1995 FR 9501219; 13.11.1995 FR 9513395
(43) Date de publication de la demande: 19.11.1997
(73) Titulaire: NOBEL PLASTIQUES, 92000 Nanterre (FR)
(72) Inventeur: DOUCHET, Jean-Claude, F-60150 Plessis-Brion (FR); DELTOUR, André, F-60400 Noyon (FR)
(74) Mandataire: Robert, Jean-Pierre
(86) Numéro de dépôt international: FR9600154
(87) Numéro de publication internationale: WO9623656

(56) Documents cités:
- EP-A- 0 256 967
- WO-A-93/13161
- DD-A- 286 602
- GB-A- 1 510 994
- US-A- 5 191 019
- PATENT ABSTRACTS OF JAPAN vol. 95, no. 001 & JP,A,07 016908 (SHIN ETSU CHEM CO LTD), 20 Janvier 1995,
- PATENT ABSTRACTS OF JAPAN vol. 4, no. 166 (C-031), 18 Novembre 1980 & JP,A,55 108437 (HITACHI CABLE LTD), 20 Août 1980,
- DATABASE WPI Week 8734 Derwent Publications Ltd., London, GB; AN 87-238828 XP002004004 & JP,A,62 161 850 (DAINICHI NIPPON CABLES) , 17 Juillet 1987
- DATABASE WPI Week 8248 Derwent Publications Ltd., London, GB; AN 82-03537J XP002004005 & JP,A,57 172 909 (HITACHI CABLE KK) , 25 Octobre 1982
- DATABASE WPI Week 8624 Derwent Publications Ltd., London, GB; AN 86-153450 XP002004006 & JP,A,61 087 746 (TATSUTA DENSEN KK) , 6 Mai 1986
- DATABASE WPI Week 7525 Derwent Publications Ltd., London, GB; AN 75-41667w XP002004007 & JP,A,49 113 845 (HITACHI CABLE KK) , 30 Octobre 1974
- DATABASE WPI Week 9407 Derwent Publications Ltd., London, GB; AN 94-054026 XP002004008 & JP,A,06 009 843 (SUMITOMO CHEM CO LTD) , 18 Janvier 1994

## Description

La tendance actuelle dans les véhicules automobiles est de remplacer les canalisations métalliques par des canalisations en matière plastique notamment à base de polyamide (nylon).

Le souci constant des constructeurs automobiles est d'améliorer la résistance au feu des installations qui véhiculent un fluide inflammable. Ils définissent donc dans ce but des normes ou du moins des exigences auxquelles doivent satisfaire les composants mis en oeuvre dans de telles installations qui tendent à augmenter le temps de résistance au feu. Ainsi, aujourd'hui les exigences sont telles que, toute installation véhiculant un liquide inflammable doit résister pendant au moins deux minutes à la flamme.

Les canalisations actuelles qui sont à base de polyamide mono ou multicouche ne présentent en moyenne qu'une résistance de l'ordre de 30 secondes en appliquant une procédure de test imposée par certains constructeurs automobiles tels que RENAULT ou MERCEDES.

On a donc cherché à protéger extérieurement de telles canalisations et il existe des techniques qui mettent en oeuvre des gaines en aluminium ou des gaines en tissu de fibres de verre éloignées de plusieurs millimètres de la canalisation afin d'éviter à la chaleur de la flamme de se propager sur la canalisation thermoplastique et de la percer lors de la fonte de la matière. Ces solutions sont toutefois chères du fait du matériau employé.

Il est connu par ailleurs d'ignifuger un conduit soit en recouvrant ce conduit d'une laque de PVC (GB-A-1 510 994) soit en le recouvrant d'un matériau compound comprenant de 30 à 70 % de PVC et de 70 à 30% d'EVA ou de polyéthylène chloré (JP-A-7 016 908). Les articles résultants ne satisfont pas les exigences actuelles.

La présente invention entend remédier à ces inconvénients de l'état de la technique en proposant un procédé d'ignifugation d'un composant pour une installation destinée à transporter un fluide inflammable tel que de l'essence.

Plus précisément l'invention a donc pour objet un procédé d'ignifugation d'un composant en matière thermoplastique appartenant à une installation de distribution d'un liquide inflammable tel qu'un carburant qui consiste à munir extérieurement ce composant d'un revêtement réticulé fait à partir d'une composition de résine à base de polychlorure de vinyle (PVC) greffé, notamment avec des organosilanes, pour pouvoir être réticulé dans la dernière phase d'élaboration du produit au moyen d'une élévation de température en présence ou non d'humidité selon le catalyseur de déclenchement de la réticulation qui aura été ajouté à la composition. On s'est rendu compte que, de façon remarquable, la résistance à la flamme d'une canalisation revêtue d'une telle couche (ou enfermée dans une gaine) en PVC ainsi réticulé était très nettement améliorée et ce à un coût très inférieur aux techniques connues. Cette résistance à la flamme a été augmentée en incorporant à ce PVC réticulable une charge minérale finemnt divisée à raison de 80% à 100% en poids par rapport au poids de résine. La quantité de charge exprimée en pour cent par rapport au poids de résine est communément admise dans le domaine : ici cela signifie que le poids de charge minérale est pratiquement égal au poids de résine mise en oeuvre. La charge minérale peut être de l'oxyde d'antimoine.

De tels PVC réticulables (PVC greffé d'organosilanes) sont mis actuellement sur le marché par la société HYDROPOLYMERE sous la référence R1762-1-2. On en connaît également qui sont commercialisés par NORSK HYDRO PLAST sous le nom NORVINEX (2801 - 2802 - 2900 -3500 - 3600 - 4200).

On notera qu'après fabrication d'une gaine seule ou coextrusion, surmoulage ou co-injection d'une couche protectrice, la réticulation s'opère lors d'une phase de traitement d'un produit en atmosphère chaude éventuellement humide provoquant la réticulation de la gaine ou de la couche externe de PVC. Cette réticulation vise à créer des liens entre les chaînes moléculaires qui renforcent la tenue en température de celui-ci. Pour maîtriser le moment de la réticulation qui doit s'opérer en phase finale du procédé de fabrication du produit, on a ajouté à la composition de PVC greffé un catalyseur qui permettra de déclencher la réticulation par apport de chaleur (avec ou sans présence d'humidité) le produit étant fini.

On a également utilisé avec succès un PVC qui comportait un additif céramique à raison de 25% à 50% de résine en poids plus une matière expansée. On se rend compte en effet que ce type de revêtement, lorsqu'il est soumis à la flamme, augmente de volume du fait de l'additif expansé qu'il contient tout en entraînant lors de son expansion des particules de céramique qui, lorsqu'elles sont soumises à la flamme et lorsque la matière expansée se pyrolyse sous l'effet de cette flamme, constitue une sorte de bouclier thermique qui protège le composant intérieur pendant un temps suffisant pour satisfaire aux normes édictées par les constructeurs automobiles.

On a enfin mis en oeuvre une composition à base de PVC pourvu d'une charge intumescente comme dans le domaine des peintures. A titre d'exemple cette charge est du type de celles fabriquées par les Laboratoires LURIE.

Dans une première application, le revêtement selon l'invention est une gaine séparée du composant dans laquelle ce composant à protéger est logé. Cette application est particulièrement intéressante dans le cas où le composant est un soufflet ou une tubulure ondulée.

Mais l'un des intérêts du procédé de l'invention réside dans le fait de pouvoir appliquer le revêtement, c'est à dire cette composition à base de PVC, directement sur la surface extérieure d'un composant en matière thermoplastique et donc de pouvoir intégrer dans l'installation de fabrication elle-même du composant l'étape d'ignifugation de celui-ci.

Ainsi, si ce composant est un tube, le procédé consiste à coextruder cette composition de PVC avec le tube. Si en revanche ce composant n'est pas tubulaire consistant par exemple en un raccord ou en un té de dérivation, le procédé consiste à réaliser l'enrobage du composant soit par surmoulage si le composant est traité après sa fabrication, soit, au moment de sa fabrication par injection, à réaliser une injection bi-composant, le premier composant étant une matière thermoplastique et le second étant l'une des compositions de PVC décrites ci-dessus.

Il est enfin intéressant de noter que la compatibilité des matériaux coextrudés, surmoulés, ou co-injectés n'a pas beaucoup d'importance étant donné que le matériau de revêtement ne participe d'aucune manière ni à la résistance mécanique de la tubulure du raccord ou du composant, ni aux fonctions barrières que cette tubulure ou ce composant doit assurer à l'égard du fluide véhiculé. Il ne s'agit que d'une fonction écran.

## Revendications

1. Procédé d'ignifugation d'un composant en matière thermoplastique appartenant à une installation de distribution d'un liquide inflammable tel qu'un carburant, caractérisé en ce qu'il consiste à munir extérieurement ce composant d'un revêtement réticulé fait à partir d'une composition de résine à base de polychlorure de vinyle (PVC).

2. Procédé selon la revendication 1, caractérisé en ce que la composition de PVC comporte une charge minérale finement divisée, à raison de 80% à 100% en poids par rapport au poids de résine.

3. Procédé selon la revendication 1, caractérisé en ce que la composition de PVC comporte une charge céramique à raison de 25% à 50 % en poids par rapport au poids de résine et une matière expansée.

4. Procédé selon la revendication 1, caractérisé en ce que la composition de PVC comporte une charge intumescente.

5. Procédé selon l'une des revendications précédentes appliqué à un tube, caractérisé en ce qu'il consiste à coextruder la composition de PVC avec la matière thermoplastique du tube, puis à procéder à la réticulation.

6. Procédé selon l'une des revendications 1 à 4 appliqué à un composant non tubulaire, caractérisé en ce qu'il consiste à procéder à un enrobage du composant par surmoulage puis à procéder à la réticulation.

7. Procédé selon l'une des revendications 1 à 4, appliqué à un composant non tubulaire caractérisé en ce qu'il consiste à procéder à une injection bi-composant, le premier composant injecté étant une matière thermoplastique, le second composant injecté étant ladite composition à base de polychlorure de vinyle greffé réticulable, puis à procéder à la réticulation.

8. Procédé selon l'une des revendications 1 à 4 appliqué à un composant en forme de soufflet ou de tube annelé, caractérisé en ce qu'il consiste à réaliser une gaine en composition à base de PVC greffé réticulable, à procéder à la réticulation de cette gaine et à y loger le composant.

## Patentansprüche

1. Verfahren zum Flammfestmachen eines Bauteils aus Thermoplast, das zu einer Zuführanlage für eine brennbare Flüssigkeit, wie z.B. einen Kraftstoff, gehört, dadurch **gekennzeichnet**, daß es daraus besteht, daß dieses Bauteil außen mit einem vernetzten Überzug versehen wird, der aus einer Harzmasse auf Polyvinylchlorid-(PVC)-Basis hergestellt wird.

2. Verfahren nach Anspruch 1, dadurch **gekennzeichnet**, daß die PVC-Zusammensetzung einen feinverteilten mineralischen Füllstoff in einer Menge von 80 bis 100 Gew.-% bezogen auf das Gewicht des Harzes enthält.

3. Verfahren nach Anspruch 1, dadurch **gekennzeichnet**, daß die PVC-Zusammensetzung einen keramischen Füllstoff in einer Menge von 25 bis 50 Gew.-% bezogen auf das Gewicht des Harzes und einen aufgeschäumten Stoff enthält.

4. Verfahren nach Anspruch 1, dadurch **gekennzeichnet**, daß die PVC-Zusammensetzung einen schwellenden Füllstoff enthält.

5. Verfahren nach einem der vorhergehenden Ansprüche, das auf ein Rohr angewendet wird, dadurch **gekennzeichnet**, daß das Verfahren aus dem Koextrudieren der PVC-Zusammensetzung mit dem Thermoplast des Rohres, und danach dem Durchführen der Vernetzung besteht.

6. Verfahren nach einem der Ansprüche 1 bis 4, das auf ein nicht rohrförmiges Bauteil angewendet wird, dadurch **gekennzeichnet**, daß es aus dem Durchführen eines Umhüllens des Bauteils durch Aufspritzen, und danach dem Durchführen der Vernetzung besteht.

7. Verfahren nach einem der Ansprüche 1 bis 4, das auf ein nicht rohrförmiges Bauteil angewendet wird, dadurch **gekennzeichnet**, daß es aus dem Durchführen eines Zweikomponenten-Spritzgusses besteht, wobei die erste eingespritzte Komponente ein Thermoplast und die zweite eingespritzte Komponente die genannte Zusammensetzung auf Basis von gepfropftem, vernetzbarem Polyvinylchlorid ist, und danach aus dem Durchführen der Vernetzung besteht.

8. Verfahren nach einem der Ansprüche 1 bis 4, das auf ein Teil in Form eines Balgens oder eines Ringrohres angewendet wird, dadurch **gekennzeichnet**, daß es aus dem Herstellen einer Hülle aus einer Zusammensetzung auf Basis von gepfropftem, vernetzbarem PVC, aus dem Durchführen der Vernetzung dieser Hülle und aus dem Unterbringen des Bauteils in dieser besteht.

## Claims

1. A method of fireproofing a component of thermoplastic material belonging to an installation for distributing a flammable liquid such as a fuel, the method being characterized in that it consists in providing the outside of the component with a cross-linked coating made from a compound resin based on polyvinyl chloride (PVC).

2. A method according to claim 1, characterized in that the PVC compound includes a finely divided inorganic filler, at a concentration equal to 80% to 100% by weight with respect to the weight of resin.

3. A method according to claim 1, characterized in that the PVC compound includes a ceramic filler at a concentration of 25% to 50% by weight with respect to the weight of resin, together with an expanded material.

4. A method according to claim 1, characterized in that the PVC compound includes a swelling filler.

5. A method according to any preceding claim, applied to a tube, characterized in that the method consists in coextruding the compound of PVC together with the thermoplastic material of the tube and then in proceeding with the cross-linking.

6. A method according to any one of claims 1 to 4, applied to a component that is not tubular, the method being characterized in that it consists in coating the component by overmolding and then in proceeding with the cross-linking.

7. A method according to any one of claims 1 to 4, applied to a component that is non-tubular, the method being characterized in that it consists in performing two-component injection, the first component being a thermoplastic material, the second component being said compound resin based on polyvinyl chloride grafted to be cross-linked.

8. A method according to any one of claims 1 to 4, applied to a component in the form of a bellows or a corrugated tube, the method being characterized in that it consists in making a sheath of PVC-based compound grafted crosslinkable and to house the component.
